# EUROPÄISCHE PATENTANMELDUNG

(11) **EP 1 428 765 A1**
(43) Veröffentlichungstag der Anmeldung: **16.06.2004**
(21) Anmeldenummer: 02027943.6
(22) Anmeldetag: 13.12.2002
(51) Int. Cl.: B65D 63/02, B65D 63/06, F16L 3/233, F16L 33/02

(54) **Spannband**

(71) Anmelder: Federnbabrik+Apparatebau Kaltbrunn AG, 8722 Kaltbrunn (CH)
(72) Erfinder: Rüegg, Toni, 8722 Kaltbrunn (CH)
(74) Vertreter: Welch, Andreas

(57) **Zusammenfassung**

Die vorliegende Erfindung betrifft ein Spannband, umfassend eine Halteplatte (4) mit mindestens zwei, vorzugsweise mindestens drei Ausbuchtungen (5a,5b,5c) zur Aufnahme eines Rastbandes (1). Das Rastband (1) weist über wenigstens einen Teil seiner Länge einstückig mit dem Rastband ausgebildete U-förmige und einheitlich ausgerichtete Lascher (2) sowie mindestens eine weitere U-förmige und an einem Ende des Bandes einstückig mit dem Rastband ausgebildete Lasche (3) auf. Das mindestens eine Lasche aufweisende Ende des Rastbandes (1) ist durch eine Ausbuchtung (5a) der Halteplatte (4) geführt. Das andere Ende des Rastbandes (1) ist durch die mindestens eine, vorzugsweise mindestens zwei weiteren Ausbuchtungen (5b,5c) der Halteplatte (4) geführt. Vorzugsweise sind die mindestens zwei weiteren Ausbuchtungen (5b,5c) der Halteplatte (4) derart zueinander beabstandet, dass beim Durchziehen des Rastbandes (1) durch diese Ausbuchtungen der die U-förmigen Laschen aufweisende Teil des Rastbandes in Intervallen eingerastet werden kann, welche geringer sind als der Abstand zwischen den Laschenenden.

## Beschreibung

Die vorliegende Erfindung betrifft ein Rastband, eine Halteplatte sowie ein diese Bauteile umfassendes Spannband.

In den unterschiedlichsten Anwendungsgebieten ist es erforderlich, zwei Gegenstände fest miteinander zu verbinden. Beispielsweise sind in Haushaltsgeräten wie Geschirrspülmaschinen Rohre enthalten, durch welche heisse Flüssigkeiten oder Gase geleitet werden. Damit in Nachbarschaft zu diesen Rohren angeordnete andere Bauteile, beispielsweise elektrische Kabel, nicht durch Wärme beeinträchtigt werden, müssen die Rohre mit einem isolierenden Material abgeschirmt werden. Dies geschieht in der Regel dadurch, dass man das Rohr mit einer Schicht aus isolierendem Material umwickelt und die Schicht mit einem Draht an dem Rohr fixiert. Derartige Drahtbefestigungen sind jedoch wenig flexibel und nicht anwenderfreundlich.

Im Stand der Technik sind Kabelbinder bekannt. Diese weisen jedoch nicht die für das vorstehende Anwendungsgebiet erforderlichen Materialeigenschaften und Ausgestaltungen auf.

Es war die Aufgabe der vorliegenden Erfindung, eine Vorrichtung bereitzustellen, mit welcher Gegenstände auf einfache und zuverlässige Weise möglichst passgenau miteinander verbunden werden können, wobei die Vorrichtung vorzugsweise auch bei hohen Temperaturen und in Anwesenheit aggressiver Chemikalien verwendbar ist.

Diese Aufgabe wird gemäss der vorliegenden Erfindung durch ein Spannband gemäss den Ansprüchen gelöst.

Die vorliegende Erfindung betrifft ein Spannband, das als separate Bauteile ein Rastband und eine Halteplatte umfasst. Das Rastband umfasst mehrere U-förmig ausgebildete Laschen, welche in Ausbuchtungen der Halteplatte einrasten können. Durch Ziehen des Rastbandes durch die Ausbuchtungen der Halteplatte und Einrasten der Laschen des Rastbandes in diesen Ausbuchtungen kann das Spannband gespannt werden und zum Verbinden mehrerer Gegenstände verwendet werden.

Die zweistückige Ausbildung des Spannbandes aus Rastband und Halteplatte erlaubt eine hohe Flexibilität bei der Ausgestaltung. So kann beispielsweise die Halteplatte an einem zu verbindenden Gegenstand bereits während dessen Fertigung bereitgestellt werden, beispielsweise durch gleichzeitiges Ausstanzen oder nachträgliches Anschweissen oder anderweitiges Anbringen. Dies ermöglicht eine feste Verbindung zwischen dem Gegenstand und der Halteplatte und somit des Spannbandes. Zudem können Halteplatte und Rastband aus unterschiedlichen Materialien gefertigt werden.

Rastband und Halteplatte sind so ausgestaltet, dass sie auf optimale und einfache Weise fest miteinander verbunden werden können. Hierzu umfasst das erfindungsgemässe Rasterband über wenigstens einen Teil seiner Länge U-förmige und einstückig mit dem Rastband ausgebildete, einheitlich ausgerichtete Laschen (2), sowie mindestens eine weitere U-förmige und an einem Ende des Bandes einstückig mit dem Rastband (1) ausgebildete Lasche (3).

Erfindungsgemäss soll unter einer Lasche ein Bauteil verstanden werden, dass durch Schlitzen des Rastbandes und Herausbiegen des herausgeschlitzten Teils gefertigt werden kann. Die Lasche ist an einer Seite mit dem Band verbunden. Gemäss der vorliegenden Erfindung sind aus Gründen der Zugfestigkeit U-förmige Laschen bevorzugt, d.h. durch Erzeugen eines im wesentlichen U-förmigen Schlitzes im Rastband bereitgestellte Laschen. Der Begriff U-förmig soll hierbei sowohl eine rechteckige U-Form als auch eine U-Form mit gerundeten Ecken einschliessen. Diese Laschen dienen als Widerhaken und können in den Ausbuchtungen der Halteplatte einrasten.

Die Laschen sind aus der Ebene des Rastbandes herausgebogen. Aus Gründen der Zugfestigkeit soll die Ebene des Rastbandes und die Ebenen der Laschen einen Winkel von 10-40°, vorzugsweise 10-30° und insbesondere bevorzugt 20° einschliessen.

Die Laschen sind auf wenigstens einem Teil der Länge des Rastbandes bereitgestellt, wobei die exakte Anordnung der Laschen von der Ausgestaltung und dem Anwendungszweck des Rastbandes abhängig gemacht werden kann. Gemäss einer bevorzugten Ausführungsform erstrecken sich die Laschen über 30-80%, vorzugsweise 30-60% der Länge des Rastbandes. Die Laschen sollen derart beabstandet sein, dass eine möglichst feine Rasterung unter Erhalt einer möglichst optimalen Zugkraft erreicht werden kann. Erfindungsgemäss bevorzugt beträgt der Abstand zwischen den Enden von jeweils benachbarten Laschen 4-8 mm, insbesondere bevorzugt 5 mm. Bei einem kleineren Abstand verbleibt zu wenig festes Rastband zwischen den Laschen beziehungsweise ist der für die Zugfestigkeit optimale Neigungswinkel der Laschen nicht mehr einstellbar. Erfindungsgemäss bevorzugt sollte zwischen dem Ende einer Lasche und dem Beginn der nächsten Lasche noch mindestens ein Abstand von 1,5 mm, vorzugsweise von 1,5 - 3 mm vorhanden sein. Grössere Abstände gehen auf Kosten der Feinrasterung. Die Laschen selbst haben vorzugsweise eine Länge von etwa 3 mm. Die Laschen sind zur Optimierung der Zugfestigkeit einheitlich zueinander ausgerichtet. Erfindungsgemäss bevorzugt sind die Laschen so ausgerichtet, dass ihre jeweiligen Laschenendkanten parallel zu den Kanten der Laschenenden sind.

Das Rastband weist erfindungsgemäss bevorzugt eine Dicke von 0,1 - 0,3 mm auf. Dadurch wird eine optimale Flexibiliät bei sehr guter Zugfestigkeit erreicht. Das erfindungsgemässe Rastband eignet sich daher zum Verbinden beliebiger Gegenstände ohne Einschränkungen hinsichtlich der Form der Gegenstände.

An einem Ende des Rastbandes ist mindestens eine weitere U-förmige Lasche vorgesehen. Diese dient zur Befestigung des entsprechenden Ende des Rastbandes an der Halteplatte. Vorzugsweise ist diese mindestens eine Lasche entsprechend den anderen, vorstehend beschriebenen Laschen ausgebildet. Erfindungsgemäss besonders bevorzugt ist diese mindestens eine Lasche in die zu den anderen Laschen entgegengesetzte Richtung geneigt.

Das erfindungsgemässe Rastband eignet sich zum Einsatz unter Bedingungen hoher Temperaturen und der Anwesenheit aggressiver Chemikalien wie Säuren. Hierfür ist das Rastband aus einem Metall oder einer Metall-Legierung gefertigt, welche Temperaturen von mindestens 180°C, vorzugsweise mindestens 250°C tolerieren, ohne Einbussen hinsichtlich der Zugfestigkeit zu erleiden. Erfindungsgemäss bevorzugt ist das Rastband aus rostfreiem Stahl oder einer Chrom und Nickel, vorzugsweise zusätzlich Molybdän enthaltenden Legierung gefertigt. Derartige Legierungen sind kommerziell erhältlich, beispielsweise die Legierung X2CrNiMo18-14-3 (316 SLD) von der Firma AEK InterForm, die Legierung X5CrNi18-10 der Firma Notz oder die Legierung X10CrNi18-8 oder X12 CrNi 17 7 der Firma Notz.

Das vorstehend beschriebene Rastband kann mit einer nachfolgend erläuterten Halteplatte zu einem Spannband kombiniert werden. Die erfindungsgemässe Halteplatte umfasst mindestens zwei Ausbuchtungen zur Aufnahme eines vorstehend beschriebenen Rastbandes. Erfindungsgemäss besonders bevorzugt ist die Ausgestaltung der Halteplatte mit mindestens drei Ausbuchtungen, vorzugsweise drei Ausbuchtungen, wobei mindestens zwei der Ausbuchtungen derart zueinander beabstandet sind, dass beim Durchziehen des Rastbandes durch diese Ausbuchtungen der die U-förmigen Laschen aufweisende Teil des Rastbandes in Intervallen eingerastet werden kann, welche geringer sind als der Abstand zwischen den Laschenenden.

Wie vorstehend beschrieben müssen die Laschen auf dem Rastband einen bestimmten Mindestabstand zueinander aufweisen. Dadurch sind die Möglichkeiten der Feinrasterung limitiert. Mit der bevorzugten Ausgestaltung der erfindungsgemässen Halteplatte mit mindestens drei Ausbuchtungen kann die Feineinstellung zusätzlich verbessert werden. Eine der Ausbuchtungen der Halteplatte dient zur Aufnahme des Endes des Rastbandes, an welchem mindestens eine weitere U-förmige und an einem Ende des Bandes einstückig mit dem Rastband ausgebildete Lasche vorhanden ist. Dieses Bandende wird in die entsprechende Ausbuchtung eingeführt. Die als Widerhaken dienende Lasche rastet in der Ausbuchtung ein. Es kommt somit zu einer festen Verbindung zwischen diesem Ende des Rastbandes und der Halteplatte. Die anderen Ausbuchtungen der Halteplatte dienen zur Aufnahme des anderen Endes des Rastbandes. Hierfür sind in der Halteplatte vorzugsweise mindestens zwei weitere Ausbuchtungen vorgesehen, wobei eine Anzahl an zwei Ausbuchtungen zusätzlich zur vorstehend beschriebenen ersten Ausbuchtung im Hinblick auf Grösse, Funktionalität und Herstellung optimal ist. Wenn der die Laschen aufweisende Teil des Rastbandes durch diese Ausbuchtungen geführt wird, können die als Widerhaken funktionierenden Laschen in jeweils einer dieser Ausbuchtungen einrasten. Gemäss der besonders bevorzugten Ausführungsform der vorliegenden Erfindung sind diese zusätzlichen Ausbuchtungen der Halteplatte derart beabstandet, dass die durch Einrasten einer Lasche in einer dieser Ausbuchtungen erhältlichen Rastintervalle kleiner sind als der Abstand zwischen zwei benachbarten Laschenenden. Wenn der die Laschen aufweisende Teil des Rastbandes durch die zusätzlichen Ausbuchtungen gezogen wird, rastet beispielsweise eine bestimmte Lasche in einer ersten Ausbuchtung ein, während eine andere Lasche die Position des Einrastens in eine zweite Ausbuchtung noch nicht erreicht hat. Zieht man das Rastband nun weiter durch die Ausbuchtungen, verlässt die eingerastete Lasche die Einrastposition, während die andere Lasche nun die Einrastposition bei einer zweiten Ausbuchtung erreicht. Der Teil des Rastbandes, der hierbei durch die Ausbuchtungen gezogen werden muss, ist kleiner als die Distanz zwischen zwei benachbarten Laschenenden.

Erfindungsgemäss bevorzugt sind mindestens zwei Ausbuchtungen der Halteplatte derart beabstandet, dass das Intervall des Einrastens des Rastbandes in diese Ausbuchtungen die Hälfte der Distanz zwischen zwei benachbarten Laschenenden auf dem Rastband beträgt.

Die erfindungsgemässe Halteplatte kann beispielsweise eine rechteckige Form haben. Ihre Dicke sollte der Dicke des Rastbandes entsprechen oder diese nicht wesentlich überschreiten. Erfindungsgemäss bevorzugt weist die Halteplatte eine Dicke von 0,1-0,4 mm auf.

Erfindungsgemäss bevorzugt ist die Halteplatte aus dem gleichen Material wie das Rastband gefertigt. Besonders bevorzugt ist die Halteplatte aus einem Metall oder einer Metall-Legierung gefertigt., welche Temperaturen von mindestens 180°C, vorzugsweise mindestens 250°C tolerieren, ohne Einbussen hinsichtlich der Zugfestigkeit zu erleiden. Erfindungsgemäss bevorzugt ist das Rastband aus rostfreiem Stahl oder einer Chrom und Nickel, vorzugsweise zusätzlich Molybdän enthaltenden Legierung gefertigt. Derartige Legierungen sind kommerziell erhältlich, beispielsweise die Legierung X2CrNiMo18-14-3 (316 SLD) von der Firma AEK InterForm, die Legierung X5CrNi18-10 der Firma Notz oder die Legierung X10CrNi18-8 oder X12 CrNi 17 7 der Firma Notz. Somit ist gewährleistet, dass die Halteplatte die gleichen Materialeigenschaften wie das Rastband aufweist.

Die Ausbuchtungen sind so geformt, dass sie zur Aufnahme eines vorstehend beschriebenen Rastbandes geeignet sind. Ihre Dimensionen sind daher leicht grösser als die Dimensionen des Rastbandes, wobei gewährleistet ist, dass die Laschen des Rastbandes in den Ausbuchtungen einrasten und das Rastband festhaken können.

Wie vorstehend erwähnt kann die erfindungsgemässe Halteplatte auf einem Gegenstand bereits während dessen Herstellung vorgesehen werden. Denkbar ist, während der Herstellung eines Rohrs durch Ausstanzen die Halteplatte mit auszustanzen und so an dem Rohr anzuordnen. Selbstverständlich kann die Halteplatte jedoch auch nachträglich an einem bereits gefertigten Gegenstand angeordnet werden. Hierfür sind alle herkömmlich verwendeten Arbeitsprozesse wie beispielsweise Schweissen verwendbar. Diese Vorgehensweise hat den Vorteil, dass die Halteplatte und somit auch das gesamte Spannband fest mit einem der zu verbindenden Gegenstände verbunden ist. Erfindungsgemäss kommen alle Gegenstände unabhängig von ihrer äusseren Form in Frage, die mit einem weiteren Gegenstand verbunden werden sollen.

Das erfindungsgemässe Spannband ist mindestens zweiteilig und umfasst das vorstehend beschriebene Rastband und die vorstehend beschriebene Halteplatte. Wie vorstehend ausgeführt wird das Spannband montiert, indem man das mindestens eine Lasche aufweisende Ende des Rastbandes in eine Ausbuchtung der Halteplatte einführt und dort einrasten lässt. Anschliessend führt man das Rastband um die zu verbindenden Gegenstände und zieht das freie Ende durch die eine oder weiteren Ausbuchtungen der Halteplatte. Man zieht das Rastband fest, wobei eine entsprechende Lasche in einer der Ausbuchtungen einrastet. Die Gegenstände sind so fest miteinander verbunden. Die Montage des Spannbandes ist somit einfach von Hand durchführbar. Das Spannband weist eine ausserordentliche Flexibilität auf und kann somit zum Verbinden von Gegenständen unabhängig von deren äusserer Form eingesetzt werden.

Wenn das Spannband unter Spannung festgezogen wird, kann es nicht mehr gelöst werden.

Das erfindungsgemässe Spannband und seine Einzelkomponenten Rastband und Halteplatte eignen sich zum Verbinden von beliebigen Gegenständen unabhängig von deren äusserer Form. Es kann hierbei hohen Zugkräften, Temperaturen von mindestens 180°C, vorzugsweise mindestens 250°C sowie aggressiven Chemikalien ausgesetzt werden. Beispiels kann ein Spannband mit einem Rastband mit eine Dicke von 0,1 mm Zugkröften von bis zu 19 kg, vorzugsweise bis zu 15 kg ausgesetzt werden. Spannbänder mit Rastbändern mit grösseren Dicken weisen entsprechend höhere Zugfestigkeiten auf. Das Spannband beansprucht sehr wenig Platz. Eine bevorzugte Anwendung ist das Befestigen von Isoliermaterial wie Glasfasermatten an Rohren, durch welche heisse Substanzen transportiert werden. Derartige Rohre sind beispielsweise in Haushaltsgeräten wie Geschirrspülern vorhanden.

Die vorliegende Erfindung wird nachstehend anhand von bevorzugten Ausführungsformen unter Bezugnahme auf die beiliegenden Zeichnungen näher erläutert, ohne auf die darin gezeigten bevorzugten Ausführungsformen eingeschränkt zu sein. Es zeigen:
- Fig. 1a:: Eine Ansicht einer bevorzugten Ausführungsform des erfindungsgemässen Rastbandes schräg von oben;
- Fig. 1b:: Eine Seitenansicht einer bevorzugten Ausführungsform des erfindungsgemässen Rastbandes;
- Fig. 2:: Eine Ansicht einer bevorzugten Ausführungsform der erfindungsgemässen Halteplatte;
- Fig. 3a:: Eine Seitenansicht einer bevorzugten Ausführungsform des erfindungsgemässen Spannbandes in einer ersten Position;
- Fig. 3b:: Eine Seitenansicht einer bevorzugten Ausführungsform des erfindungsgemässen Spannbandes in einer zweiten Position;
- Fig. 4:: Eine Ansicht von zwei Gegenständen, die mit dem erfindungsgemässen Spannband miteinander verbunden sind.

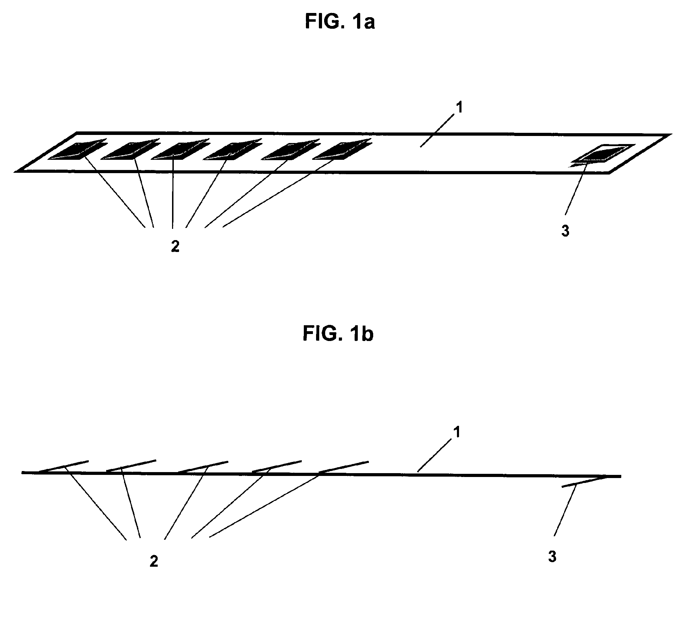

Fig. 1a zeigt ein erfindungsgemässes Rastband (1) schräg von oben gesehen. Auf einem Teil des Bandes (1) sind rechteckig U-förmige Laschen (2) angeordnet. In der hier dargestellten Ausführungsform weist das Rastband eine Länge von 280 mm und eine Breite von 8 mm auf. Es ist 0,1 mm dick. Auf einer Länge von 150 mm weist das Band (1) die Laschen (2) auf. Die Laschen (2) sind aus der Ebene des Bandes (1) herausgebogen und schliessen mit der Bandebene einen Winkel von 20° ein. Die Laschen (2) sind 3 mm lang und weisen zueinander einen Abstand von Laschenende zu Laschenende von 5 mm auf. An einem Ende des Bandes (1) ist eine zusätzliche rechteckige U-förmige Lasche (3) angeordnet. Diese schliesst ebenfalls mit der Bandebene einen Winkel von 20° ein, ist allerdings im Vergleich zu den Laschen (2) in entgegengesetzter Richtung herausgebogen. Die Lasche (3) ist ebenfalls 3 mm lang. Fig. 1b zeigt eine Seitenansicht dieser bevorzugten Ausführungsform des erfindungsgemässen Rastbandes (1).

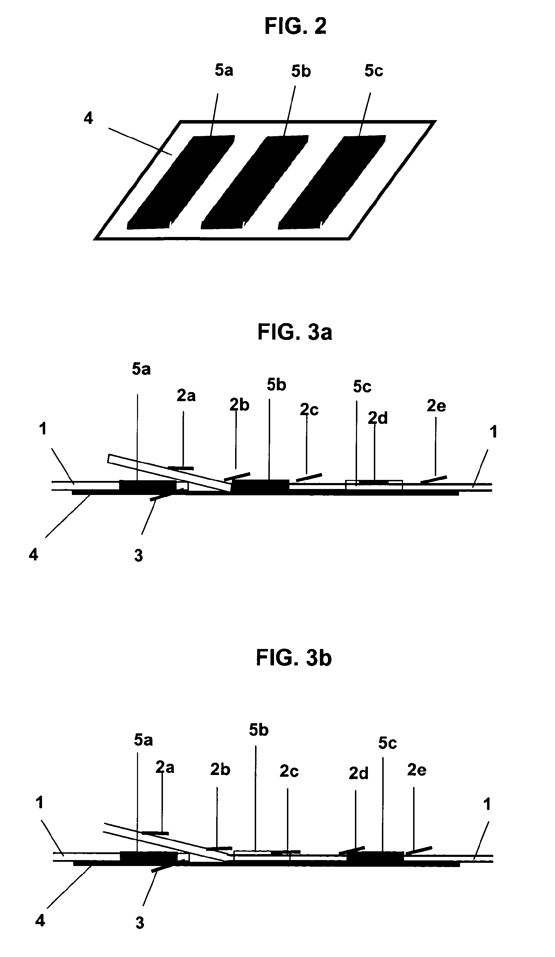

In Fig. 2 ist eine bevorzugte Ausführungsform der erfindungsgemässen Halteplatte (4) gezeigt. Die Platte (4) weist drei Ausbuchtungen (5a, 5b, 5c) auf. Die Ausbuchtung (5a) ist zur Aufnahme des Endes des Rastbandes (1) mit der Lasche (3) vorgesehen. Die Ausbuchtungen (5b, 5c) sind zur Aufnahme des anderen Bandendes und des die Laschen (2) aufweisenden Bandabschnitts vorgesehen. Die Platte (4) besitzt Abmessungen von 20 x 25 mm und eine Dicke von 0,3 mm. Die Ausbuchtungen (5a, 5b, 5c) sind jeweils 4mm breit und 10 mm lang. Sie bilden mit der Platte (4) einen Zwischenraum von 0,2 bis 0,3 mm. Die Ausbuchtungen (5b und 5c) weisen zueinander einen Abstand von 2,5 mm auf. Dadurch wird ein Rasterintervall von 2,5 mm für das Rastband (1) bereitgestellt. Das Rastband (1) und die Halteplatte (4) sind jeweils aus einer Cr und Ni enthaltenden Legierung hergestellt.

In Fig. 3a und 3b ist das erfindungsgemässe Spannband in unterschiedlichen Positionen gezeigt. In beiden Positionen ist das eine Ende des Rastbandes (1) über die Lasche (3) in der Ausbuchtung (5a) eingerastet. Das andere Bandende ist in Fig. 3a über die Lasche (2b) in der Ausbuchtung (5b) eingerastet. In Fig. 3b ist das Rastband (1) ein kleines Stück weiter durch die Ausbuchtungen (5b, 5c) gezogen. Die Lasche (2b) hat sich aus der Einrastposition entfernt. Die Lasche (2d) ist nun in die Ausbuchtung (5c) eingerastet. Der hierbei durch die Ausbuchtungen (5b, 5c) gezogene Abschnitt des Rastbandes (1) beträgt 2,5 mm, also die Hälfte der jeweiligen Distanz zwischen den Laschen (2a, 2b, 2c, 2d, 2e).

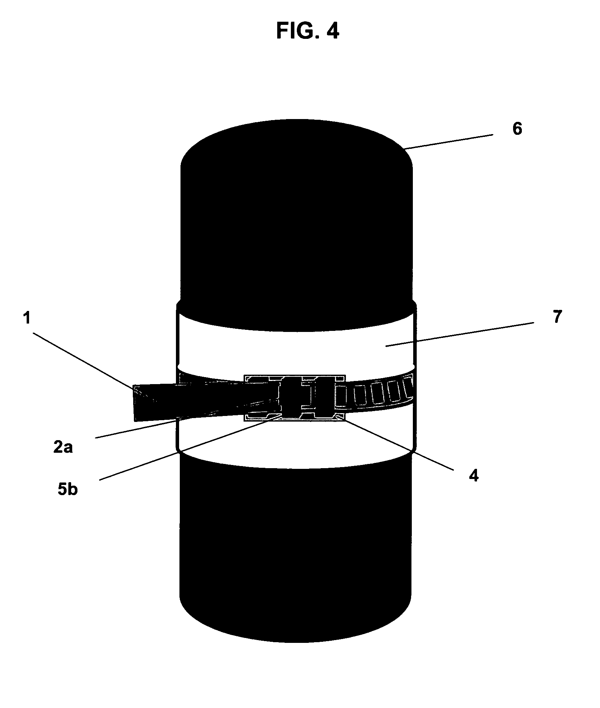

In Fig. 4 ist ein Rohr (6) mit einer Matte (7) mit Hilfe des erfindungsgemässen Spannbandes verbunden. Das Rastband (1) ist um die beiden Gegenstände (6, 7) geführt und mit beiden Enden in die Ausbuchtungen der Platte (4) eingeführt. Das Rastband (1) ist festgezogen und mit einem Ende in der Ausbuchtung (5b) eingerastet.

## Patentansprüche

1. Rastband (1), umfassend über wenigstens einen Teil seiner Länge U-förmige und einstückig mit dem Rastband ausgebildete, einheitlich ausgerichtete Laschen (2), sowie mindestens eine weitere U-förmige und an einem Ende des Bandes einstückig mit dem Rastband (1) ausgebildete Lasche (3).

2. Rastband nach Anspruch 1, **dadurch gekennzeichnet, dass** die Ebene des Rastbandes (1) und die Ebenen der Laschen (2, 3) einen Winkel von 10-40°, vorzugsweise von 20° einschliessen.

3. Rastband nach Anspruch 1 oder 2, **dadurch gekennzeichnet, dass** die an einem Ende des Bandes (1) ausgebildete mindestens eine Lasche (3) im Vergleich zu den restlichen Laschen (2) in die entgegengesetzte Richtung geneigt ist.

4. Rastband nach einem der Ansprüche 1 bis 3, **dadurch gekennzeichnet, dass** die Enden der über wenigstens einen Teil der Länge des Bandes (1) ausgebildeten Laschen (2) zueinander einen Abstand von 4-8 mm, vorzugsweise von 5 mm aufweisen und zwischen einem Laschenende und dem Beginn der nachfolgenden Lasche ein Abstand von 1,5-3 mm vorliegt.

5. Rastband nach einem der Ansprüche 1 bis 4, **dadurch gekennzeichnet, dass** das Rastband (1) aus einem Metall oder einer Metall-Legierung, vorzugsweise aus einer säurebeständigen Metall-Legierung gefertigt ist.

6. Rastband nach einem der Ansprüche 1 bis 5, **dadurch gekennzeichnet, dass** das Rastband (1) eine Dicke von 0,1-3 mm aufweist.

7. Halteplatte (4), umfassend mindestens zwei Ausbuchtungen (5a, 5b) zur Aufnahme eines Rastbandes gemäss einem der Ansprüche 1 bis 6.

8. Halteplatte nach Anspruch 7, umfassend mindestens drei Ausbuchtungen (5a, 5b, 5c), vorzugsweise drei Ausbuchtungen (5a, 5b, 5c), wobei mindestens zwei der Ausbuchtungen (5b, 5c) derart zueinander beabstandet sind, dass beim Durchziehen des Rastbandes durch diese Ausbuchtungen der die U-förmigen Laschen aufweisende Teil des Rastbandes in Intervallen eingerastet werden kann, welche geringer sind als der Abstand zwischen den Laschenenden.

9. Halteplatte nach Anspruch 7 oder 8, **dadurch gekennzeichnet, dass** die mindestens zwei Ausbuchtungen (5b, 5c) derart zueinander beabstandet sind, dass beim Durchziehen des Rastbandes durch diese Ausbuchtungen der die U-förmigen Laschen aufweisende Teil des Rastbandes in Intervallen eingerastet werden kann, welche die Hälfte des Abstands zwischen den Laschenenden betragen.

10. Halteplatte nach einem der Ansprüche 7 bis 9, **dadurch gekennzeichnet, dass** die Halteplatte aus einem Metall oder einer Metall-Legierung, vorzugsweise aus einer säurebeständigen Metall-Legierung gefertigt ist.

11. Halteplatte nach einem der Ansprüche 7 bis 10, **dadurch gekennzeichnet, dass** die Halteplatte eine Dicke von 0,1-0,4 mm aufweist.

12. Spannband, umfassend eine Halteplatte (4) gemäss einem der Ansprüche 7 bis 11 sowie ein Rastband (1) gemäss einem der Ansprüche 1 bis 6, wobei das mindestens eine Lasche (3) aufweisende Ende des Rastbandes (1) durch eine Ausbuchtung (5a) der Halteplatte (4) geführt ist und das andere Ende des Rastbandes (1) durch die mindestens eine, vorzugsweise mindestens zwei Ausbuchtungen (5b, 5c) der Halteplatte (4) geführt ist.

13. Spannband gemäss Anspruch 12, **dadurch gekennzeichnet, dass** das Rastband (1) und die Halteplatte (4) aus dem gleichen Material gefertigt sind.

14. Gegenstand, umfassend eine daran angebrachte Halteplatte (4) gemäss einem der Ansprüche 7 bis 11.

15. Verwendung eines Rastbandes gemäss einem der Ansprüche 1 bis 6 oder einer Halteplatte gemäss einem der Ansprüche 7 bis 11 oder eines Spannbandes gemäss einem der Ansprüche 12 bis 13 zum Verbinden von mindestens zwei Gegenständen.
